# EUROPÄISCHE PATENTANMELDUNG

(11) **EP 0 592 840 A2**
(43) Veröffentlichungstag der Anmeldung: **20.04.1994**
(21) Anmeldenummer: 93115023.9
(22) Anmeldetag: 17.09.1993
(51) Int. Cl.: B60S 1/18, B60S 1/44, B60S 1/20, B60S 1/34

(54) **Vorrichtung zum Wischen von seitlich gewölbten KFZ-Windschutzscheiben**

(30) Priorität: 12.10.1992 DE 4234357
(71) Anmelder: Richter, Heinrich, D-35260 Stadtallendorf (DE)
(72) Erfinder: Richter, Heinrich, D-35260 Stadtallendorf (DE)
(74) Vertreter: Reinhard - Skuhra - Weise & Partner

(57) **Zusammenfassung**

Die Erfindung betrifft eine Vorrichtung zum horizontalen Wischen von Scheiben (10), insbesondere von seitlich gewölbten KFZ-Windschutzscheiben. Sie besteht aus einem Wischerarm (12), einem an dem Wischerarm (12) befestigten Wischerblatt (13), einem Schlitten (14), der ein Schlittenführungsprofil (15) hintergreift und an diesem über drei Rollen (22,23) gehalten ist, die in Hohlprofilabschnitten (24,25) axial geführt sind, und aus einer Antriebseinrichtung (16), durch die der Schlitten (14) an dem Schlittenführungsprofil (15) hin- und herbewegbar ist, wobei der Wischerarm (12) scheibenwölbungskonform gegenüber dem Schlitten (14) über eine Teleskopanordnung (43) mit Vorspannung in Einschubrichtung verschiebbar geführt wird.

## Beschreibung

Die Erfindung betrifft eine Vorrichtung zum horizontalen Wischen von Scheiben, insbesondere von seitlich gewölbten KFZ-Windschutzscheiben, gemäß dem Oberbegriff des Patentanspruchs 1.

Eine derartige Vorrichtung ist bereits in der DE-OS 37 21 842 offenbart. Bei dieser vorbekannten Wischvorrichtung wird ein Wischerarm auf einem Laufwagen hin- und herbewegt, der über vier Führungsstellen an einer zugeordneten Führungsschiene gelagert ist. Als nachteilig ist bei dieser vorbekannten Vorrichtung anzusehen, daß durch diese Schlittenlagerung die Teilezahl erhöht und die Lagerkonzeption überbestimmt ist. Kritisch wird der Einsatz dieser vorbekannten Vorrichtung besonders dann, wenn seitlich gewölbte Scheiben zu wischen sind, weil dann das Schlittenführungsprofil zunächst einer scheibenwölbungskonformen Verformung unterworfen werden muß, was Spezialwerkzeuge erfordert und sich außerordentlich aufwendig gestalten kann. Außerdem kann es bei verformten Führungsprofilen zu Beeinträchtigungen bei der Führung des Schlittens kommen. Schließlich sieht die vorbekannte Vorrichtung ein nach vorne offenes Führungsprofil vor, das damit einer hohen Verschmutzungsgefahr ausgesetzt ist, wodurch die einwandfreie Funktionsfähigkeit gefährdet ist.

Der Erfindung liegt die Aufgabe zugrunde, eine Vorrichtung der eingangs genannten Gattung verfügbar zu machen, mit der auch seitlich gewölbte Scheiben sicher und zuverlässig wischbar sind.

Erfindungsgemäß wird diese Aufgabe durch die im Patentanspruch 1 gekennzeichneten Merkmale gelöst.

Bevorzugte Merkmale, die die Erfindung vorteilhaft weiterbilden sind den nachgeordneten Patentansprüchen zu entnehmen.

Aufgrund der erfindungsgemäßen Gestaltung der Vorrichtung wird für den Schlitten eine sichere und statisch bestimmte Führung realisiert, die über insgesamt drei voneinander beabstandete Führungsstellen erfolgt, wobei zwei der Führungsstellen an einem Führungsprofilabschnitt nebeneinander und eine Führungsstelle an einem vorzugsweise gegenüberliegenden Führungsprofilabschnitt angeordnet sein kann.

Vorteilhaft kann die Vorrichtung mit einem geraden Schlittenführungsprofil auch zum Wischen von gewölbten Scheiben eingesetzt werden, ohne daß eine scheibenwölbungskonforme Anpassung des Schlittenführungsprofils erforderlich ist. Dies wird bei der Erfindung in günstiger Weise dadurch erreicht, daß nicht der Schlitten, sondern der Wischerarm relativ zu dem Schlitten verlagerbar, vorzugsweise verschiebbar, angeordnet ist. Hierdurch kann der Wischerarm durch seine Verlagerung stets in zuverlässiger Anlage an selbst stark gewölbten Scheiben gehalten werden.

Gemäß einer bevorzugten Ausgestaltung der Erfindung ist es für eine einfache und sichere Realisierung der Schlittenbewegung günstig, wenn der Schlitten das Schlittenführungsprofil hintergreift und an diesem über Rollen gehalten ist, die in Hohlprofilabschnitten axial geführt sind.

Vorteilhaft wird damit der Lagerbereich für den Schlitten aus der im Anströmbereich von KFZ-Winschschutzscheiben liegenden Zone mit hoher Verschmutzungsgefahr in eine rückwärtige Zone verlegt, in der eine deutlich verringerte Verschmutzungsgefahr besteht.

Der Wischerarm ist vorzugsweise gegenüber dem Schlitten verschiebbar gelagert, wobei nach einer bevorzugten Ausgestaltung der Erfindung eine drehfeste Teleskoplagerung vorgesehen ist, bei der bevorzugt der Wischerarm in Einschubstellung vorgespannt gelagert ist. Zur Erzeugung der Vorspannung, die den Wischerarm in die Einschubstellung an dem Schlitten drückt, ist in besonders verschmutzungsunanfälliger Weise vorgesehen, daß eine Druckfeder in den Wischerarm, insbesondere in das Teleskop, integriert ist, welche vorzugsweise einstellbar ist.

Der Wischerarm kann aufgrund der Wirkung der Vorspannfeder teleskopisch bezüglich des Schlittens derart verschoben werden, daß er der seitlichen Wölbung einer Scheibe unter Berücksichtigung des nötigen Anlagedrucks bei horizontaler Hin- und Herbewegung zu folgen vermag. Gemäß einer bevorzugten Ausgestaltung der Erfindung ist für den Wischerarm ein scheibenwölbungskonformes Armführungsprofil vorgesehen, das durch eine am Wischerarm befestigte Rolle entgegen der Vorspannung des Wischerarms beaufschlagbar ist. Hierdurch wird in günstiger Weise gewährleistet, daß der Anlagedruck des Wischerblatts an der gewölbten Scheibe immer gleich bleibt und nicht die Kräfte der Wischerarmvorspannung das Wischerblatt verschleißfördernd beaufschlagen. Das Armführungsprofil ist unterhalb der Scheibe angeordnet, vorzugsweise unterhalb eines Rahmens der Scheibe in die Karosserie integriert. Alternativ kann die Antriebseinrichtung nebst Armführungsprofil auch oberhalb der Scheibe in die Karosserie integriert sein, beispielsweise bei einer Heckscheibe eines Kraftfahrzeugs. In gleicher Weise kann auch eine entsprechende Anordnung bzw. Integration des Schlittenführungsprofil vorgesehen sein.

Gemäß einer bevorzugten weiteren Ausgestaltung der Erfindung weist die Antriebseinrichtung eine Dichtlippenanordnung auf, die gegen einen Schlittenantriebszapfen anliegt, welcher vorzugsweise einen in Bewegungsrichtung ovalen Querschnitt im Dichtbereich aufweist. Hierdurch wird einerseits im Bereich größerer Verschmutzung eine zuverlässige Dichtung für die Antriebseinrichtung erreicht. Andererseits ist durch die ovale Querschnittsgestaltung des Schlittenantriebszapfens in günstiger Weise daffür Sorge getragen, daß sich die Dichtlippenanordnung nicht übermäßig aufspreizen muß, um den Schlittenantriebszapfen hindurchzulassen. Außerdem kommt die ovale Querschnittsform einer Aufspreiz- und anschließenden Schließfunktion der Dichtlippenanordnung bei der hin- und hergehenden Bewegung des Schlittenantriebszapfens entgegen, wobei ideale Anlagebedingungen zur Abdichtung an dem ovalen Querschnitt erreicht werden, die mit kreisförmigen Querschnitt nicht erreichbar wären.

Die Antriebseinrichtung weist einen Motor, vorzugsweise einen Elektromotor, auf, der ein Umlauforgan mit einem Antriebszapfen antreibt, welcher über eine Antriebsscheibe an einem Schlittenantriebszapfen angelenkt ist. Das Umlauforgan ist vorzugsweise als Kette ausgebildet, die motorseitig von einem Kettenrad angetrieben wird und die parallel zum Schlittenführungsprofil in einem Kettenführungsprofil angeordnet ist, welches bevorzugt von einem geschlossenen Gehäuse umgeben ist, in das die Antriebswelle des Motors eintritt und aus dem der Schlittenantriebszapfen durch eine Dichtlippenanordnung ragt. Durch diese konstruktiven Maßnahmen wird nicht nur die Verschmutzungsgefahr verhindert, sondern auch eine zuverlässige Funktion mit langen Standzeiten realisiert.

Der Wischerarm ist aus seiner vertikalen Scheibenanlage-Stellung, also senkrecht zum Schlitten, nach einer weiteren Ausgestaltung der Erfindung seitlich, vorzugsweise gegen eine Rückstellkraft, verschwenkbar, wobei gemäß einer bevorzugten weiteren Ausgestaltung der Erfindung für die seitlichen Rückstellkräfte an dem Wischerarm vorzugsweise einstellbare Druckfedern vorgesehen sind, durch die der Wischerarm in seine ursprüngliche vertikale Stellung bringbar ist. Hierdurch erhält der Wischerarm eine günstige elastische seitliche Verstellbarkeit, um vorteilhaft bestimmten betriebsbedingten Einflußgrößen angepaßt werden zu können.

Nachfolgend wird die Erfindung unter Bezugnahme auf die begigefügten Zeichnungen näher erläutert. Es zeigen:
- Figur 1: eine Draufsicht auf eine perspektivische Ansicht auf eine gewölbte Scheibe mit einem Ausführungsbeispiel einer erfindungsgemäßen Vorrichtung;
- Figur 2: einen Teilschnitt im Bereich des Wischerarmantriebs;
- Figur 3: einen vergrößerten Teilabschnitt im Bereich der Teleskopbefestigung des Wischerarms an dem Schlitten;
- Figur 4: eine Schnittansicht im Bereich des Schlittenantriebs;
- Figur 5: eine teilschematische Darstellung des Schlittenantriebs gemäß Figur 4;
- Figur 6: eine Schnittansicht im Bereich der Dichtlippenanordnung, die den Durchtritt des Schlittensantriebszapfens mit seinem ovalen Querschnitt veranschaulicht;
- Figur 7: eine perspektivische Teilansicht auf das Schlittenführungsprofil und den Wischerarm;
- Figur 8: eine schematisierte Schnittansicht zur Darstellung der Befestigung des Wischerarms; und
- Figur 9: eine schematische Schnittansicht zur Darstellung der elastischen seitlichen Verstellbarkeit des Wischerarms gegen einstellbare Rückstellkräfte von Druckfedern.

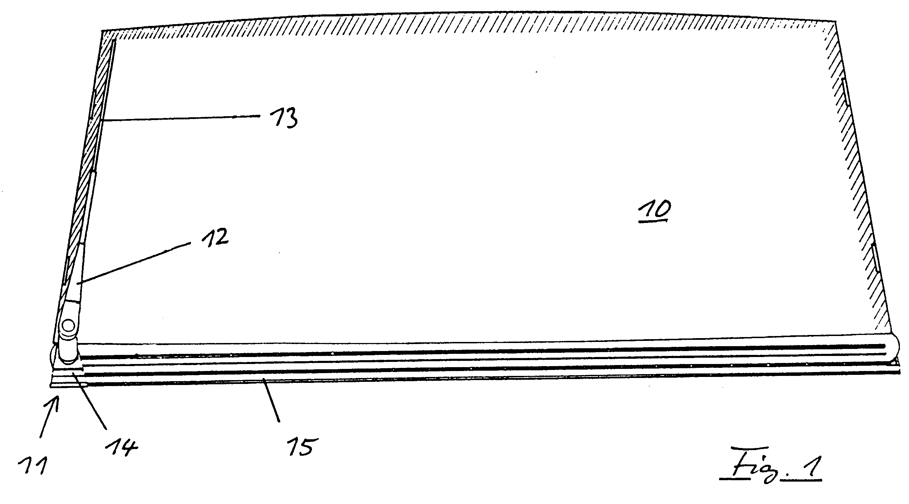

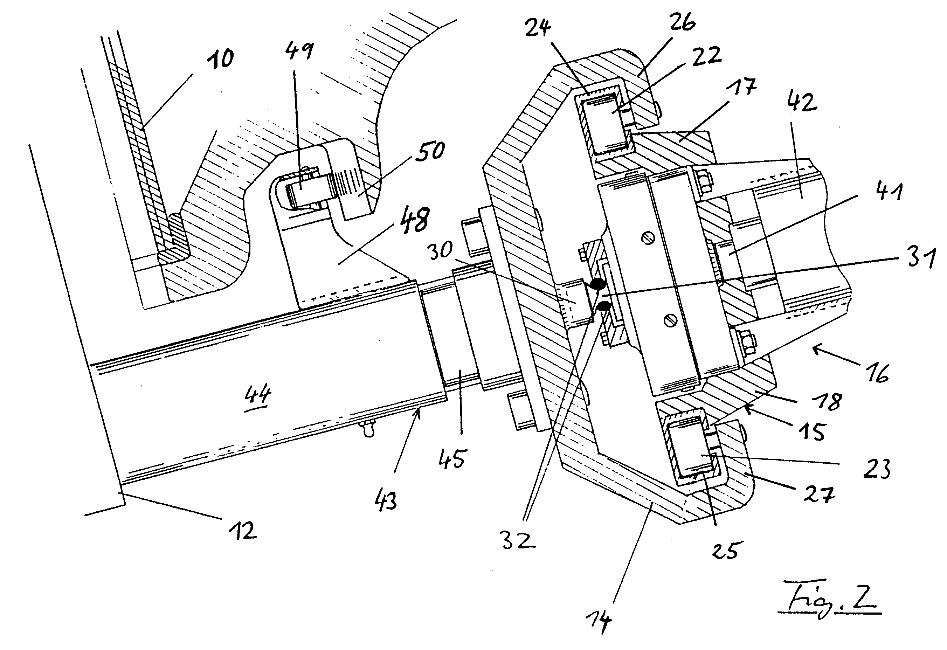

In Figur 1 ist eine perspektivische Ansicht einer KFZ-Windschutzscheibe 10 gezeigt, an der ein Ausführungsbeispiel einer erfindungegemäßen Vorrichtung 11 zum horizontalen Wischen unterhalb des unteren Scheibenrandes vorgesehen ist. Die Vorrichtung 11 besitzt einen Wischerarm 12, ein an dem Wischerarm 12 befestigtes Wischerblatt 13, einen Schlitten 14, der an einem Schlittenführungsprofil 15 verschiebbar gelagert ist und an dem der Wischerarm 12 vertikal gehalten ist, und eine in Figur 1 nicht erkannbare Antriebseinrichtung 16, vgl. Figuren 2, 4 und 5, durch die der Schlitten 14 an dem Schlittenführungsprofil 15 hin- und herbewegbar ist

Gemäß Figur 2 besitzt das Schlittenführungsprofil 15 einen oberen Abschnitt 17 und einen unteren Abschnitt 18, wobei an dem oberen Abschnitt 17, wie auch aus Figur 7 entnehmbar ist, eine Führungsstelle 19 und an dem unteren Abschnitt 18 zwei Führungsstellen 20 und 21 vorgesehen sind. Die Führungsstellen 19, 20 und 21 sind durch Rollen 22 bzw. 23 realisiert, die in axialen Hohlprofilabschnitten 24 bzw. 25 des Schlittenführungsprofils 15 seitlich verschiebbar gelagert sind, wobei die Rollen 22 und 23 über Zapfen an hintergreifenden Abschnitten 26 bzw. 27 des Schlittens 14 gelagert sind, wie gut in Figur 2 zu erkennen ist.

Der Schlitten 14 umgreift somit krallenartig das Schlittenführungsprofil 15 und ist an diesem rückseitig seitlich verschiebbar gehalten.

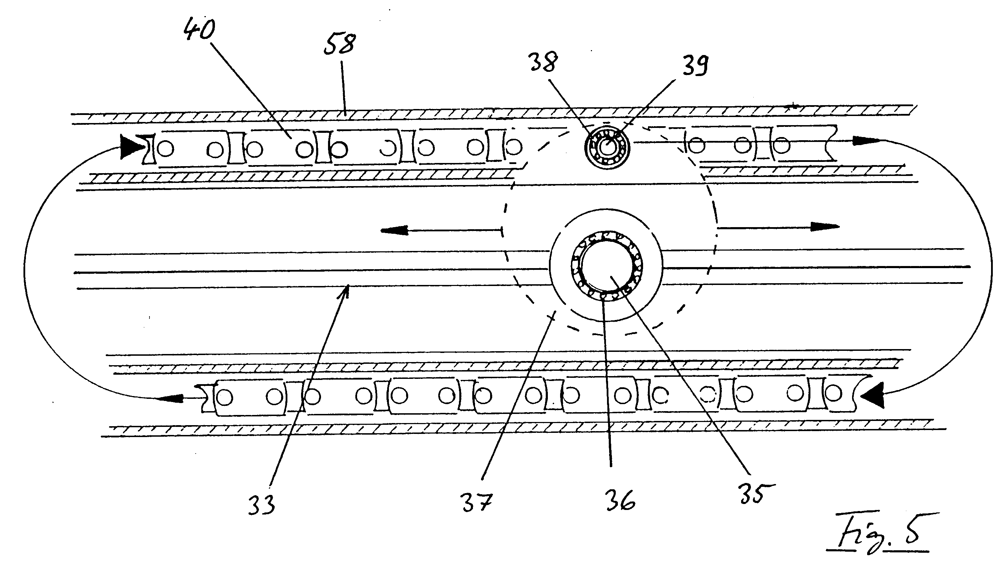

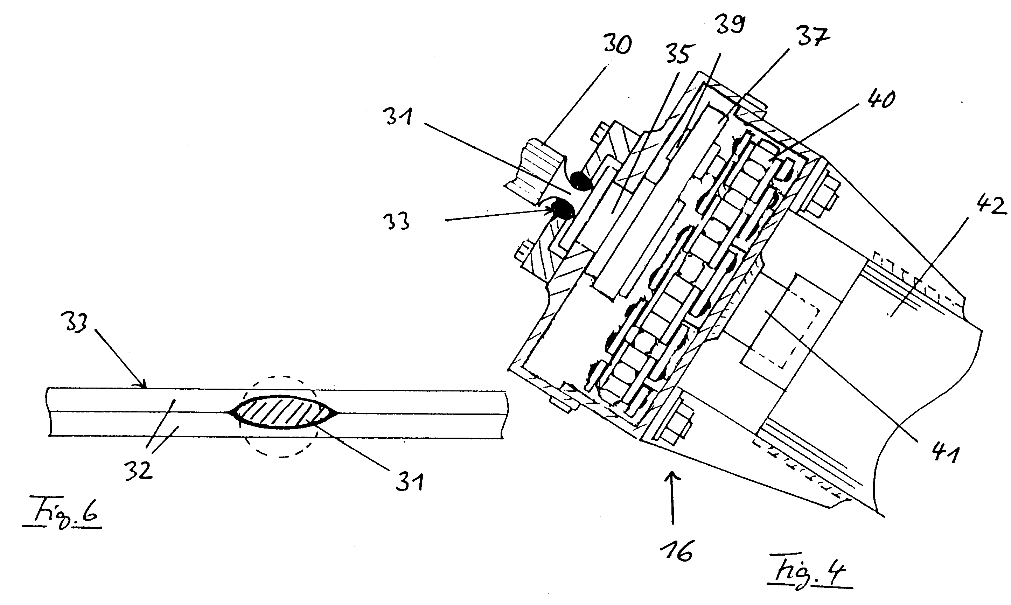

Angetrieben wird der Schlitten 14 über einen angeformten Schlittenzapfen 30, der in einem Zapfenabschnitt 31 mit ovalem Querschnitt übergeht, an dem Dichtlippen 32 an einer Dichtlippenanordnung 33 anliegen, wie gut in Figur 6 erkennbar. Gemäß Figur 4 erweitert sich der ovale Zapfenabschnitt 31 nach Durchtritt durch die Dichtlippenanordnung 33 im Inneren eines geschlossenen Gehäuses 34 zu einem Zapfen 35, der wie in Figur 5 ersichtlich, über Kugellager 36 an einer Antriebsscheibe 37 gelagert ist. Von dem Zapfen 35 beabstandet ist an der Antriebsscheibe 37 über ein Wälzlager 38 ein Gelenkzapfen 39 angelenkt, der seinerseits an einer umlaufenden Kette 40 befestigt ist und mit dieser gemäß Figur 5 umläuft, wobei sich hieraus für den Schlittenantriebszapfen 30 nach Art einer Kurbelschleife eine hin- und hergehende Bewegung ergibt. Die Kette 40 ist in einem Kettenführungsprofil 58 angeordnet. Angetrieben wird die Kette 40 in nicht dargestellter Weise über ein Kettenrad, das an der Antriebswelle 41 eines elektrischen Motors 42 befestigt ist.

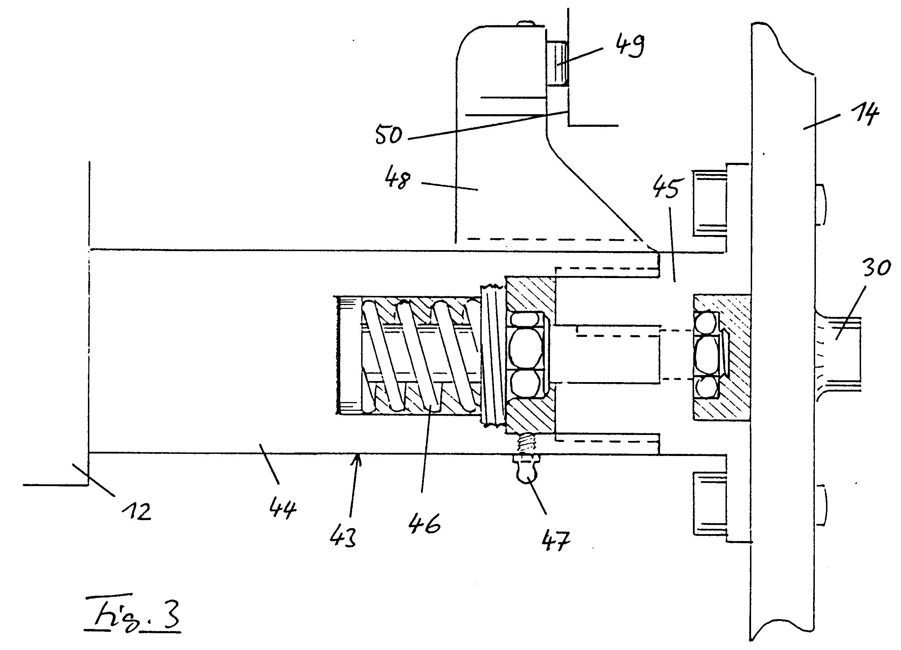

An dem Schlitten 14 ist gemäß Figur 2 und 3 der Wischerarm 12 über eine drehfeste Teleskopanordnung 43 verschiebbar gelagert, die sich aus einem äußeren Teleskoprohr 44, das an dem Wischerarm 12 befestigt ist, und einem inneren Teleskoprohr 45 zusammensetzt, welches an dem Schlitten 14 montiert ist. Gemäß Figur 3 ist das äußere Teleskoprohr 44 über eine Druckfeder 46 in Einschubrichtung zu dem das Innenteleskoprohr 45 vorgespannt, wobei die Vorspannung einstellbar und durch eine Kontrollschraube 47 fixierbar ist. An dem äußeren Teleskoprohr 44 ist ein Halter 48 befestigt, der eine Führungsrolle 49 in vertikaler Zuordnung zur Teleskoplängsachse drehbar hält, welche auf einem Armführungsprofil 50 gelagert ist, das unterhalb der Scheibe 10 in die Karosserie eines Kraftfahrzeuges integriert ist.

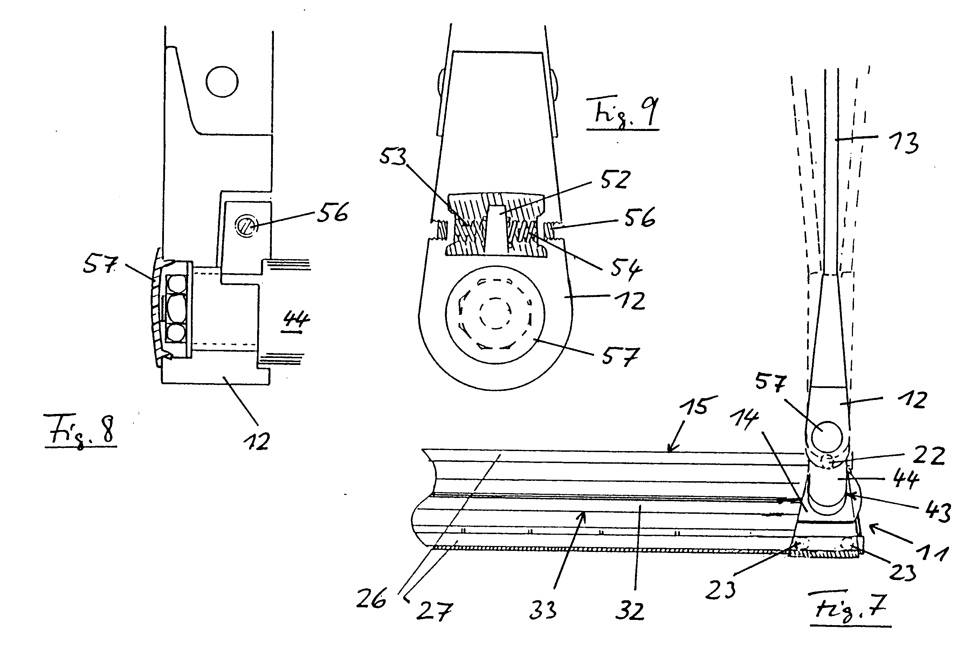

Der Wischerarm 12 ist aus seiner in Figur 1 dargestellten vertikalen Stellung geringfügig seitlich verschwenkbar an dem äußeren Teleskoprohr 44 gelagert, das bezüglich des Teleskoprohrs 45 nur axial verschiebbar, jedoch nicht verdrehbar ist. In den Figuren 8 und 9 ist schematisch angedeutet, daß das äußere Teleskoprohr 44 einen Zapfen 52 aufweist, gegen den sich beiderseits Durckfedern 53 und 54 abstützen, die ihrerseits durch Madenschrauben 55 und 56 einsetzbar und einstellbar sind. Abgedeckt wird der Befestigungsbereich der Wischerarms 12 an dem äußeren Teleskoprohr 44 durch eine Kappe 57, um das Einlagern von Schmutz im Befestigungsbereich zu vermeiden.

## Patentansprüche

1. Vorrichtung zum horizontalen Wischen von Scheiben, insbesondere von seitlich gewölbten KFZ-Windschutzscheiben (10), bestehend aus
einem Wischerarm (12),
einem an dem Wischerarm (12) befestigten Wischerblatt (13), einem an einem Schlittenführungsprofil (15) verschiebbar gelagerten Schlitten (14), an dem der Wischerarm (12) vertikal gehalten ist, und aus
einer Antriebseinrichtung (16), durch die der Schlitten (14) an dem Schlittenführungsprofil (15) hin- und herbewegbar ist,
**dadurch gekennzeichnet**,
daß der Schlitten (14) an einem Abschnitt (18) des Schlittenführungsprofils (15) doppelt und an einem anderen Abschnitt (17) des Schlittenführungsprofils (15) einfach geführt ist, und
daß der Wischerarm (12) scheibenwölbungskonform gegenüber dem Schlitten (14) verlagerbar ist.

2. Vorrichtung nach Anspruch 1,
dadurch gekennzeichnet,
daß der Schlitten (14) das Schlittenführungsprofil (15) hintergreift und an diesem über Rollen (22, 23) gehalten ist, die in Hohlprofilabschnitten (24, 25) axial geführt sind.

3. Vorrichtung nach Anspruch 1 oder 2,
dadurch gekennzeichnet,
daß der Wischerarm (12) an dem Schlitten (14) verschiebbar gelagert ist.

4. Vorrichtung nach Anspruch 3,
dadurch gekennzeichnet,
daß der Wischerarm (12) an dem Schlitten (14) teleskopierbar und in Einschubstellung vorgespannt gelagert ist.

5. Vorrichtung nach Anspruch 4,
dadurch gekennzeichnet,
daß zur Vorspannung des Wischerarms (12) an dem Schlitten (14) eine Druckfeder (46) in dem Wischerarm (12) integriert ist.

6. Vorrichtung nach Anspruch 5,
dadurch gekennzeichnet,
daß die Druckfeder (46) einstellbar ist.

7. Vorrichtung nach einem der vorangehenden Ansprüche,
dadurch gekennzeichnet,
daß für den Wischerarm (12) ein scheibenwölbungskonformes Armführungsprofil (50) vorgesehen ist, das durch eine am Wischerarm (12) befestigte Rolle (49) entgegen einer Wischerarmvorspannung (46) beaufschlagbar ist.

8. Vorrichtung nach Anspruch 7,
dadurch gekennzeichnet,
daß das Armführungsprofil (59) unterhalb der Scheibe (10) angeordnet ist.

9. Vorrichtung nach einem der vorangehenden Ansprüche,
dadurch gekennzeichnet,
daß das Schlittenführungsprofil (15) unterhalb der Scheibe (10) angeordnet ist.

10. Vorrichtung nach einem der vorangehenden Ansprüche,
dadurch gekennzeichnet,
daß für die Antriebseinrichtung (16) eine Dichtlippenanordnung (33) vorgesehen ist, die gegen einen Schlittenantriebszapfen (31) anliegt.

11. Vorrichtung nach Anspruch 10,
dadurch gekennzeichnet,
daß der Schlittenantriebszapfen (31) einen in Bewegungsrichtung ovalen Dichtlippen-Anlagequerschnitt aufweist.

12. Vorrichtung nach einem der vorangehenden Ansprüche,
dadurch gekennzeichnet,
daß die Antriebseinrichtung (16) einen Motor (42) aufweist, der ein Umlauforgan (40) mit einem Gelenkzapfen (39) antreibt, welcher über eine Antriebsscheibe (37) an einem Schlittenantriebszapfen (31, 35) angelenkt ist.

13. Vorrichtung nach Anspruch 12,
dadurch gekennzeichnet,
daß als Umlauforgan eine Kette (40) vorgesehen ist, die parallel zum Schlittenführungsprofil (15) in einem Kettenführungsprofil (58) angeordnet ist.

14. Vorrichtung nach Anspruch 13,
dadurch gekennzeichnet,
daß das Kettenführungsprofil (58) von einem geschlossenen Gehäuse umgeben ist, in das eine Motorantriebswelle (41) eintritt und aus dem der Schlittenantriebszapfen (31) durch eine Dichtlippenanordnung (33) ragt.

15. Vorrichtung nach einem der vorangehenden Ansprüche,
dadurch gekennzeichnet,
daß der Wischerarm (12) aus seiner vertikalen Stellung seitlich verschwenkbar ist.

16. Vorrichtung nach Anspruch 15,
dadurch gekennzeichnet,
daß der Wischerarm (12) seitlich gegen Rückstellkräfte verschwenkbar ist.

17. Vorrichtung nach Anspruch 16,
dadurch gekennzeichnet,
daß für die seitlichen Rückstellkräfte an dem Wischerarm (12) Druckfedern (53, 54) vorgesehen sind, durch die der Wischerarm (12) in seine ursprüngliche vertikale Stellung bringbar ist.

18. Vorrichtung nach Anspruch 17,
dadurch gekennzeichnet,
daß die Rückstellkraft der Druckfedern (53, 54) einstellbar ist.
